# EUROPEAN PATENT APPLICATION

(11) **EP 2 898 974 A2**
(43) Date of publication of application: **29.07.2015**
(21) Application number: 15150475.0
(22) Date of filing: 08.01.2015
(51) Int. Cl.: B23H 7/10

(54) **Processing liquid ejection device of wire electrical discharge machine**

(30) Priority: 23.01.2014 JP 2014010314
(71) Applicant: FANUC CORPORATION, Oshino-mura Minamitsuru-gun Yamanashi 401-0597 (JP)
(72) Inventor: Yamaoka, Masahide, Minamitsuru-gun, Yamanashi 401-0597 (JP)
(74) Representative: Ward, James Norman

(57) **Abstract**

A processing liquid ejection device of a wire electrical discharge machine includes: a processing liquid ejection portion (16); a holding portion (14) of which the diameter decreases as the holding portion (14) approaches the processing liquid ejection portion (16); and an angle changing member (12) that is provided in a connection portion between the processing liquid ejection portion and the holding portion so as to change the relative angle between the processing liquid ejection portion and the holding portion.

## Description

### BACKGROUND OF THE INVENTION

### 1. Field of the Invention

The present invention relates to a processing liquid ejection device of a wire electrical discharge machine.

### 2. Description of the Related Art

A wire electrical discharge machine processes a work into a desired shape by causing a discharge using a voltage applied across a wire electrode and the work and changing the relative position between the wire electrode and the work. Further, a processing liquid is ejected from a nozzle to a discharge position in the processing state.

The processing liquid which is ejected to the discharge position is circulated by a processing liquid circulation line to a processing liquid tank. Then, the processing liquid is cleaned and cooled in the processing liquid circulation line.

In general, the processing speed of the wire electrical discharge machine is slower than those of the other tool machines. As one of the methods of increasing the processing speed of the wire electrical discharge machine, there is known a method of causing upper and lower nozzles to move close to a work as much as possible and supplying a processing liquid to a processing groove as a discharge position. Accordingly, since the processing liquid is sufficiently supplied to the processing groove, it is possible to effectively remove sludge such as processing waste produced during the processing, and hence to sufficiently cool the wire electrode. Further, it is possible to prevent the short circuit of the wire during the processing.

In this way, it is effective to cause the nozzle of the wire electrical discharge machine to move close to the work. However, there is a case where the gap between the work and each of the upper and lower nozzles may not be optimally set due to the shape or the size of the work and the shape or the size of the clamping fixture that fixes the work to a table of the machine.

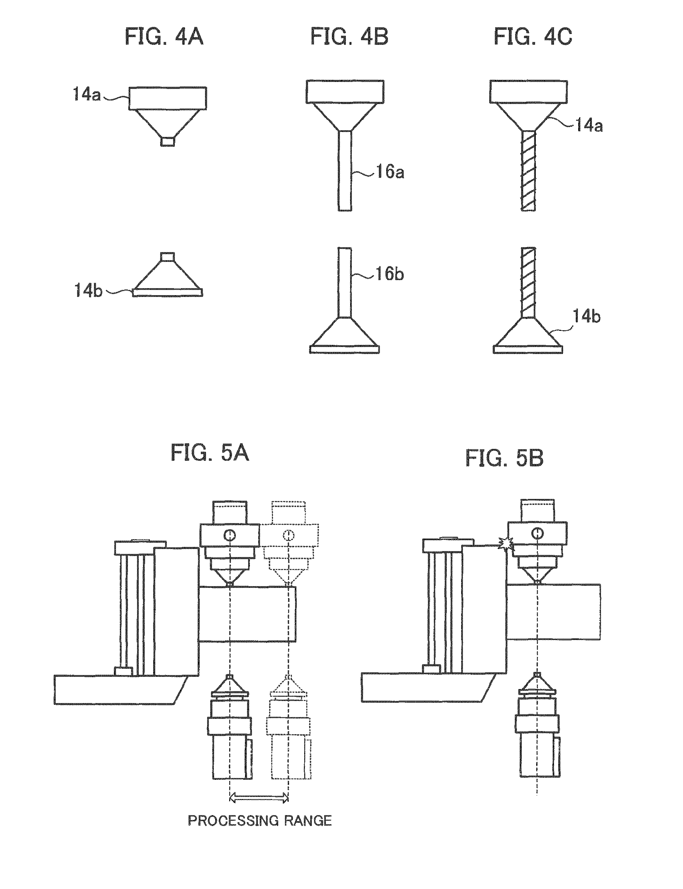

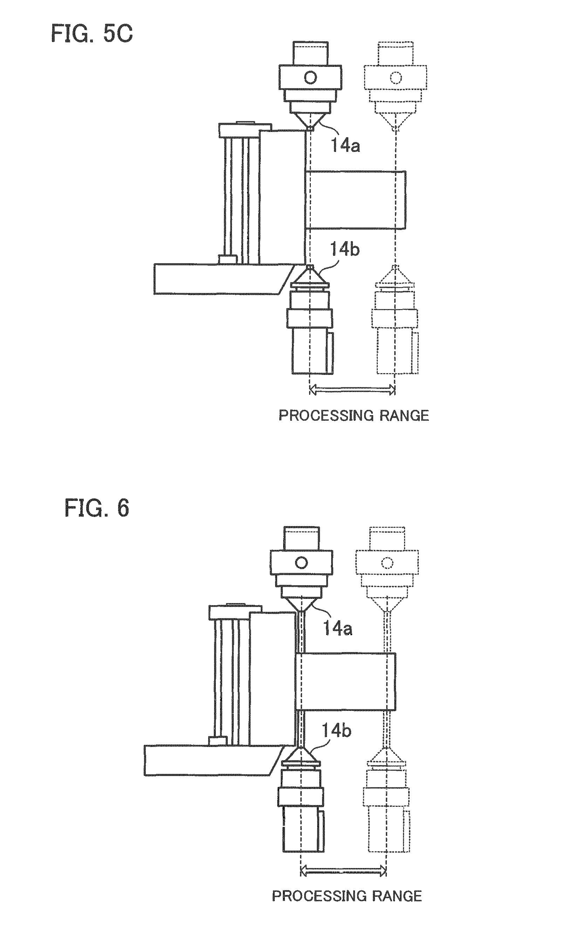

For example, when a work, that has a different thickness depending on a place is processed in a case where a nozzle shape of the related art illustrated in Fig. 4A is used, the gap between the nozzle and the work may be set optimally by causing the upper nozzle to move close to the work in a place where the nozzle is away from the thick work as illustrated in Fig. 5A. However, when at least one of each of the upper and lower nozzles and the work is moved in the horizontal direction in such a state so as to be close to the thick position, a nozzle support portion collides with the work as illustrated in Fig. 5B, and hence a problem arises in that the processing in the vicinity of the thick position is disturbed. In order to prevent this problem, the upper nozzle may be moved in the upper direction to be located at a high position in the thick position as illustrated in Fig. 5C. However, in this case, the gap between the nozzle and the work increases.

Then, when the gap between the nozzle and the work is not optimally set, the gap is formed between each of the upper and lower nozzles and the work, and hence the processing speed decreases compared to the case where the gap between the nozzle and the work is set optimally.

For that reason, in order to optimize the gap between each of the upper and lower nozzles and the work which is being processed, JP-A 10-328937 and JP-A 58-211831 disclose a structure in which a nozzle is formed so that a processing liquid ejection opening is long (see Fig. 4B) and a structure in which a processing liquid ejection opening is formed in a bellows type in order to optimize the gap between the work and the nozzle even when the plate thickness to be processed changes (see Fig. 4C).

JP-A 10-328937 discloses a wire discharge processing apparatus in which a guide block is prepared so that a surface facing a work has an unevenness having the same shape as the unevenness of the work and a surface facing a wire guide is a flat surface and both unevenness portions come into close contact with each other and a wire discharge processing apparatus in which a flexible nozzle ejecting a processing liquid is attached to a front end of a wire guide.

Further, JP-A 58-211831 discloses a structure in which a nozzle has a tip longer than a general one and hence the nozzle does not interfere with a step portion of a work.

In JP-A 10-328937, since the flexible nozzle is used, the gap between the work and the nozzle may be maintained even when a work having a step shape or a slope shape of which the thickness changes is processed, and hence the pressure of the processing liquid may be adjusted. Further, when the processing liquid is suctioned, sludge produced during the processing may be efficiently discharged.

However, in the wire discharge processing, a tapering may be performed by inclining a wire electrode in addition to the processing performed while the upper and lower nozzles are held in the vertical direction. In JP-A 10-328937, the nozzle is flexible only in one direction of the Z-axis direction. For this reason, for example, in the processing in which the wire electrode is inclined with respect to the Z axis, the wire electrode contacts the nozzle, and hence there is a concern that the processing may not be performed with high precision.

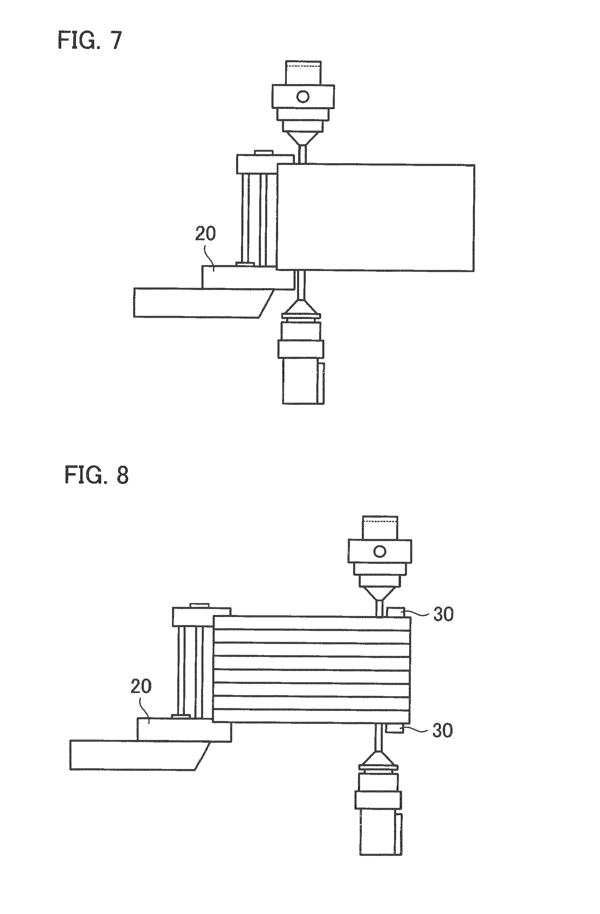

In JP-A 58-211831, since the nozzle has a tip longer than a general one, a structure is realized in which the nozzle does not interfere with the step portion of the work. Fig. 6 is a diagram illustrating the apparatus disclosed in JP-A 58-211831, where the processing may be performed so that the nozzle is close to the work while the processing range is ensured compared to the case of Fig. 5C. Further, even in the case where a fixture 20 is used as in Fig. 7 or the case where thin work pieces overlapping each other are fixed by a bolt 30 as in Fig. 8, the processing may be performed while the nozzle is close to the work without causing any interference between the nozzle support portion and the fixture 20 or the bolt 30.

However, even in JP-A 58-211831, in the processing method such as tapering that processes the wire electrode in an inclined state, there is a concern that the wire and the nozzle may interfere with each other.

### SUMMARY OF THE INVENTION

Therefore, an object of the invention is to provide a processing liquid ejection device of a wire electrical discharge machine capable of widening a processing range by reducing a concern that a nozzle may interfere with or contact a fixture or a work and of processing the work without decreasing a processing speed regardless of the shape or the size of the fixture or the work.

According to the invention, there is provided a processing liquid ejection device of a wire electrical discharge machine configured to process a work by relatively moving the work placed on a table and a wire electrode stretched between an upper wire guide and a lower wire guide, the processing liquid ejection device of the wire electrical discharge machine including: a processing liquid ejection portion; a holding portion of which the diameter decreases as the holding portion approaches the processing liquid ejection portion; and an angle changing member, provided in a connection portion between the processing liquid ejection portion and the holding portion, and configured to change the relative angle between the processing liquid ejection portion and the holding portion.

Since the relative angle between the processing liquid ejection portion and the holding portion may be changed by the angle changing member, it is possible to supply a sufficient amount of a processing liquid to a discharge area subjected to a wire discharge processing compared to the case where a tip of a nozzle is not inclined. Accordingly, it is possible to effectively remove sludge and hence to increase the processing speed.

The angle changing member may include a flexible member having a flexible shape. Alternatively, the angle changing member may include a spherical body and a spherical bearing member holding the spherical body.

The processing liquid ejection portion may be flexible so that the length thereof is changeable.

Since the invention has the above-described configuration, it is possible to provide a processing liquid ejection device of a wire electrical discharge machine capable of widening a processing range by reducing a concern that a nozzle may interfere with or contact a fixture or a work and of processing the work without decreasing a processing speed regardless of the shape or the size of the fixture or the work.

### BRIEF DESCRIPTION OF THE DRAWINGS

The above-described object, the other object, and the feature of the invention will be proved from the description of embodiments below with reference to the accompanying drawings. In these drawings:
Figs. 1A and 1B are diagrams illustrating a nozzle shape of a first embodiment.
Fig. 2 is a diagram illustrating a state where a work is processed by a processing liquid ejection device of a wire electrical discharge machine of a first embodiment.
Fig. 3 is a diagram illustrating a nozzle shape of a second embodiment.
Figs. 4A to 4C are diagrams illustrating nozzle shapes of the related art.
Figs. 5A to 5C are diagrams illustrating a state where a work is processed by using a nozzle of the related art.
Fig. 6 is a diagram illustrating a state where a work is processed by using the nozzle of the related art.
Fig. 7 is a diagram illustrating a state where a work is processed by using the nozzle of the related art.
Fig. 8 is a diagram illustrating a state where a work is processed by using the nozzle of the related art.

### DETAILED DESCRIPTION OF THE PREFERRED EMBODIMENTS

### (First Embodiment)

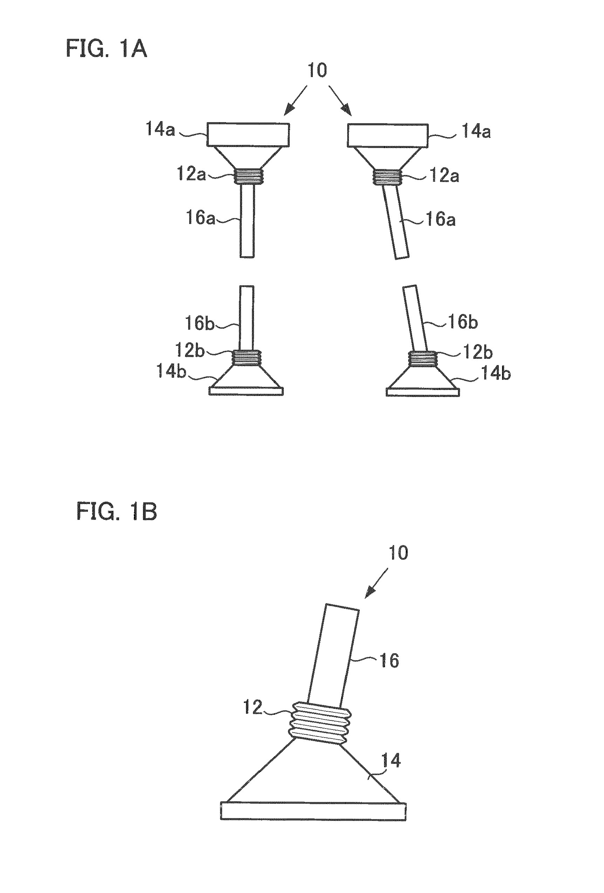

Figs. 1A and 1B are diagrams illustrating a nozzle shape of the embodiment, where Fig. 1A is an entire view and Fig. 1B is an enlarged view illustrating the vicinity of a bellows. In the drawings, Reference Numeral 10 indicates a nozzle, and as the components constituting the nozzle 10, Reference Numeral 14a indicates an upper holding portion, Reference Numeral 14b indicates a lower holding portion, Reference Numeral 16a indicates an upper processing liquid ejection portion, and Reference Numeral 16b indicates a lower processing liquid ejection portion. Each holding portion 14 is formed in a conical shape, and each processing liquid ejection portion 16 is formed in a cylindrical shape. Further, each holding portion 14 and each processing liquid ejection portion 16 are formed of ceramic or resin, but may be formed of metal.

Further, each of Reference Numerals 12a and 12b indicates a rubber-like bellows that connects the holding portion 14 to the processing liquid ejection portion 16. Further, a wire guide (not illustrated) which stretches a wire in a correct direction is provided inside the upper holding portion 14a and the lower holding portion 14b, and a wire (not illustrated) is stretched between the upper holding portion 14a and the lower holding portion 14b so as to pass through the upper processing liquid ejection portion 16a and the lower processing liquid ejection portion 16b. Although not illustrated in the drawings, in Fig. 1B, the lower end of the processing liquid ejection portion 16 is formed so as to be slightly inserted into the upper end of the bellows 12, the upper end of the holding portion 14 is formed so as to be slightly inserted into the lower end of the bellows 12, the processing liquid ej ection portion 16 and the holding portion 14 are connected to each other through the bellows 12, and the processing liquid ejection portion 16 and the holding portion 14 do not directly contact each other.

In this way, since the bellows 12 is provided in the base portion of the processing liquid ejection portion 16 having a long tip, the inclination angle of the processing liquid ejection portion 16 may be changed in response to the inclination angle of the wire. Thus, even when the wire is inclined in any one of the U-axis direction and the V-axis direction, the processing liquid ejection portion 16 may be inclined in the same direction as the inclination direction of the wire.

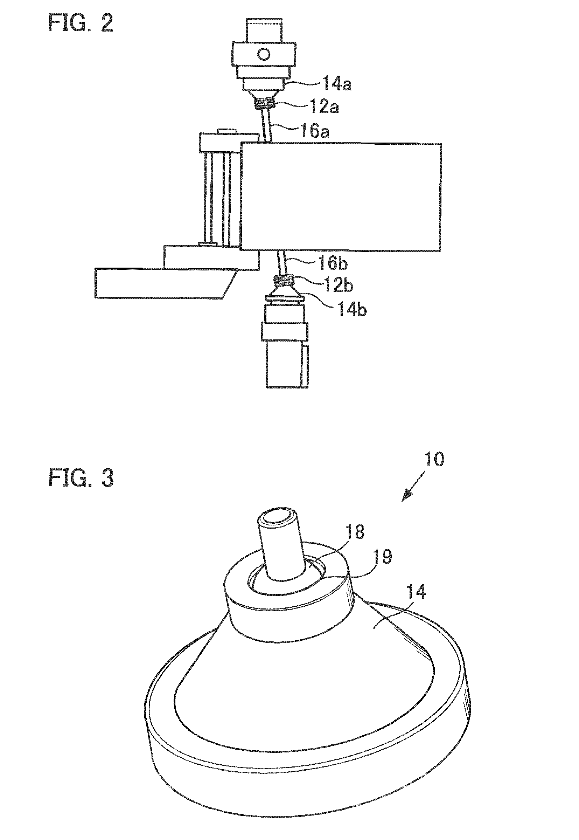

Fig. 2 is a diagram illustrating a state where a work is processed by using a processing liquid ejection device of a wire electrical discharge machine of the embodiment. A tapering may be performed by changing the relative position between the upper holding portion 14a and the lower holding portion 14b. Further, the upper processing liquid ejection portion 16a and the lower processing liquid ejection portion 16b are inclined by the inclination of the wire (not illustrated) during the tapering. At that time, the relative angle between the holding portion 14 and the processing liquid ejection portion 16 may be changed by the bellows 12 provided between the holding portion 14 and the processing liquid ejection portion 16.

In the embodiment, since the processing liquid ejection portion 16 having a long tip is provided in the holding portion 14 and the bellows 12 is provided between the holding portion 14 and the processing liquid ejection portion 16, it is possible to process the work while the work is adjacent to the processing liquid ejection portion 16 without any interference with the fixture 20 or the work even in the step portion of the end of the work or the vicinity of the fixture 20 as illustrated in Fig. 2.

### (Second Embodiment)

Fig. 3 is a diagram illustrating the shape of the processing liquid ejection portion of the embodiment. This embodiment is different from the first embodiment in that a different angle changing member is provided instead of the bellows 12 of the first embodiment. That is, the end of the processing liquid ejection portion 16 is provided with a metallic spherical body 18, and the end of the holding portion 14 is provided with a bearing 19 so that the spherical body 18 is implanted into the bearing 19. The spherical body 18 and the bearing 19 of the embodiment are both formed of metal.

In the embodiment with the spherical bearing structure including the spherical body 18 and the bearing 19, it is possible to more smoothly and obliquely move the processing liquid ejection portion 16 in the U-axis direction and the V-axis direction compared to the structure of the bellows 12 of the first embodiment.

Furthermore, it is possible to employ both the structure of the bellows 12 of the first embodiment and the spherical bearing structure including the spherical body 18 and the bearing 19 of the second embodiment.

Further, the processing liquid ejection portion 16 may be provided with a flexible mechanism that changes the length of the processing liquid ejection portion. With such a configuration, since it is possible to change the vertical position of the tip of the processing liquid ejection portion 16 without moving the holding portion 14 in the vertical direction, it is possible to more rapidly set the gap between the processing liquid ejection portion 16 and the work.

Furthermore, a rotation angle sensor or the like may be provided in the base portion of the processing liquid ejection portion 16 in order to detect the inclination angle of the processing liquid ejection portion 16. In the above-described embodiments, since the angle of the processing liquid ejection portion 16 is changed while the processing liquid ejection portion 16 is pulled by the positional deviation of the wire caused by the deviation of the relative position of the upper and lower holding portions 14, it is difficult to recognize the accurate angle of the processing liquid ejection portion 16. In this case, it is possible to recognize the accurate angle of the processing liquid ejection portion 16 by the rotation angle sensor.

Further, in the above-described embodiments, a case has been described in which the holding portion 14 has a conical shape and the processing liquid ejection portion 16 has a cylindrical shape, but the invention is not limited to these shapes. For example, the other shapes such as a pyramid shape and a rectangular tube shape may be used.

In the above-described embodiments, the angle of the processing liquid ejection portion 16 is changed while the processing liquid ejection portion 16 is pulled by the positional deviation of the wire caused by the deviation of the relative position of the upper and lower holding portions 14, but the processing liquid ejection portion 16 may be provided with a drive member such as a servo-motor so that the position or the inclination angle of the processing liquid ejection portion 16 is actively changed. With such a configuration, it is possible to more precisely change the position or the inclination angle of the processing liquid ejection portion 16 compared to the case where the angle of the processing liquid ejection portion 16 is changed by the wire.

## Claims

1. A processing liquid ejection device of a wire electrical discharge machine configured to process a work by relatively moving the work placed on a table and a wire electrode stretched between an upper wire guide and a lower wire guide, the processing liquid ejection device of the wire electrical discharge machine comprising:
a processing liquid ejection portion;
a holding portion of which the diameter decreases as the holding portion approaches the processing liquid ejection portion; and
an angle changing member, provided in a connection portion between the processing liquid ejection portion and the holding portion, and configured to change the relative angle between the processing liquid ejection portion and the holding portion.

2. The processing liquid ejection device of the wire electrical discharge machine according to claim 1,
wherein the angle changing member includes a flexible member having a flexible shape.

3. The processing liquid ejection device of the wire electrical discharge machine according to claim 1,
wherein the angle changing member includes a spherical body and a spherical bearing member holding the spherical body.

4. The processing liquid ejection device of the wire electrical discharge machine according to any one of claims 1 to 3,
wherein the processing liquid ejection portion is flexible so that the length thereof is changeable.
